**Europäisches Patentamt**

**European Patent Office**

**Office européen des brevets**

(19)

(11) Numéro de publication : **0 223 633**
**B1**

(12) **FASCICULE DE BREVET EUROPÉEN**

(45) Date de publication du fascicule du brevet :
02.11.89

(51) Int. Cl.⁴ : **H 05 H 1/36**

(21) Numéro de dépôt : **86402127.4**

(22) Date de dépôt : **29.09.86**

(54) **Dispositif d'anti-soufflage de l'arc dans une torche à plasma.**

(30) Priorité : **30.09.85 FR 8514421**

(43) Date de publication de la demande :
**27.05.87 Bulletin 87/22**

(45) Mention de la délivrance du brevet :
**02.11.89 Bulletin 89/44**

(84) Etats contractants désignés :
**DE FR GB SE**

(56) Documents cités :
**DE—A— 1 913 705**
**FR—A— 1 375 853**
**US—A— 3 988 566**

(73) Titulaire : **JEUMONT-SCHNEIDER Société anonyme dite:**
**31-32, Quai de Dion Bouton**
**F-92811 Puteaux Cedex (FR)**

(72) Inventeur : **Glinski, Christophe**
**29, Bis, rue du Gros Noyer**
**F-95120 Ermont (FR)**
Inventeur : **Tiran, Georges**
**268, Bld St-Denis**
**F-92400 Courbevoie (FR)**

(74) Mandataire : **Phélip, Bruno et al**
**c/o Cabinet Harlé & Phélip 21, rue de La Rochefoucauld**
**F-75009 Paris (FR)**

## Description

L'invention concerne les torches à plasma et plus particulièrement un dispositif d'anti-soufflage de l'arc dans une torche à plasma de puissance en transfert de chaleur.

On sait que l'arc, dans une torche à plasma, présente une caractéristique tension-courant négative, ce qui signifie que lorsque l'intensité du courant diminue, la tension de l'arc croît. Cette particularité rend l'arc instable ; le système d'alimentation et de contrôle doit en assurer la stabilisation.

Or, comme la puissance appliquée à une torche à plasma est essentiellement obtenue à partir d'un redresseur, par exemple à thyristors, connecté au réseau d'alimentation, la valeur de la tension d'arc est limitée supérieurement par les possibilités en tension de la source d'alimentation. Il n'y a plus stabilisation de l'arc dès lors que la tension d'arc approche de la tension limite de la source.

Or, on sait réaliser une boucle d'asservissement en courant. Le brevet français FR-A-1 375 853 décrit par exemple un dispositif de contrôle du gradient de courant d'induit pour gros moteur à courant continu, comprenant une boucle de linéarisation à action rapide et une boucle intégrale périphérique à action plus lente. Puisqu'une torche à plasma présente des caractéristiques essentiellement variables, équivalentes à celles d'un moteur à courant continu, en régime discontinu, on peut mettre en œuvre facilement une telle boucle d'asservissement en courant. Cet asservissement ne permet pas cependant de contrôler de façon précise et rapide la tension d'arc qui varie en fonction de nombreux paramètres tels que la contrepression dans la torche, l'évolution du courant dans la bobine de champ de la torche ou l'usure des électrodes.

La présente invention a donc pour but d'obvier à ces inconvénients et éviter tout soufflage de l'arc lors de perturbations transitoires. A cet effet, il y a lieu, dès que l'on détecte que la tension de l'arc dépasse un seuil déterminé, de faire croître momentanément le courant d'arc pour déplacer instantanément le point de fonctionnement et réduire rapidement la tension de l'arc. Dans un deuxième temps, on pourra éventuellement, diminuer le débit du gaz plasmogène, de manière à également faire baisser la tension de l'arc.

En d'autres mots, le dispositif d'anti-soufflage de l'arc dans une torche à plasma selon l'invention permet de modifier momentanément la position du point de fonctionnement en courant et en tension de l'arc en agissant, en fonction de la tension de l'arc, sur la référence de courant appliquée à une boucle d'asservissement en courant de l'arc.

Selon l'invention, le dispositif d'anti-soufflage comprend un détecteur de seuil émettant un signal destiné à faire croître immédiatement l'intensité du courant de référence appliqué à ladite boucle d'asservissement en courant dès lorsque la tension d'arc est supérieure à une valeur déterminée, et, en série avec ce détecteur de seuil, un amplificateur dont le gain chute progressivement, en fonction du temps écoulé à partir de l'émission du signal par le détecteur de seuil, de manière à atténuer progressivement ce signal et à ramener petit à petit l'intensité du courant de référence à sa valeur nominale.

De préférence, le dispositif d'anti-soufflage selon l'invention, comprend en outre un intégrateur unidirectionnel dont une borne d'entrée est connectée à la sortie de l'amplificateur précité et dont la borne de sortie commande la valve d'injection du gaz plasmagène dans la torche, de telle manière qu'il résulte d'un signal issu de l'amplificateur, une réduction proportionnelle à l'amplitude de ce signal, du débit du gaz plasmagène dans la torche.

L'invention sera mieux comprise et d'autres buts, avantages et caractéristiques de celle-ci apparaîtrons plus clairement à la lecture de la description qui suit d'un mode de réalisation de l'invention, donnée à titre non limitatif, à laquelle est jointe une planche de dessin.

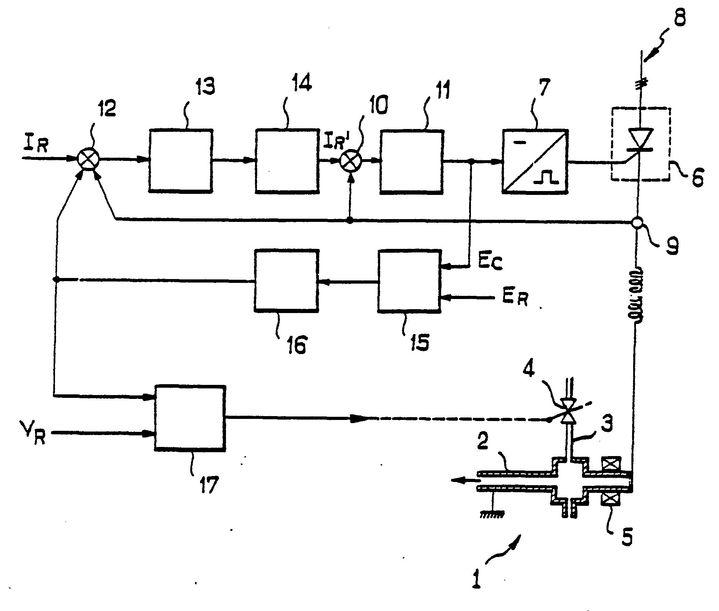

La figure unique représente schématiquement un dispositif d'anti-soufflage conforme à la présente invention avec une boucle conventionnelle d'asservissement en courant de l'arc.

En référence à cette figure, une torche à plasma 1 est constituée par une électrode aval et une tuyère 2 d'évacuation des gaz chauds, généralement mise à la terre, un conduit 3 d'arrivée du gaz plasmagène pourvu d'une électrovalve 4 de réglage du débit de ce gaz, une électrode amont, des bobines de champ 5.

L'ensemble est destiné à gérer un arc électrique entre l'électrode amont de la torche où sont disposées les bobines 5 et l'électrode aval. Cet arc est traversé par le gaz plasmagène.

La torche est alimentée en courant continu au moyen d'un redresseur représenté schématiquement sous la référence 6 et connecté au réseau 8 d'alimentation alternatif. Un tel redresseur peut, par exemple, être du type dodécaphasé série, à thyristors et diodes, commandé au moyen d'impulsions engendrées par le circuit de commande 7. Au moyen d'un transformateur de courant 9, on réalise une boucle d'asservissement en courant de façon conventionnelle. En effet, l'arc électrique dans la torche agit comme la réaction positive d'un amplificateur et accentue toute évolution du courant. Ainsi, on peut par exemple mettre en œuvre une boucle rapide agissant au moyen d'un premier comparateur 10 sur la référence de courant $I_{R'}$ et d'un amplificateur 11 à gain variable engendrant une tension de commande appliquée au circuit de commande 7. A cette boucle rapide, on adjoint une boucle plus lente au moyen d'un deuxième comparateur 12 auquel est appliquée une référence de courant $I_R$ et délivrant un signal qui est d'abord appliqué à un circuit de calibrage 13 puis à un intégrateur 14 pour délivrer le signal de référence $I_{R'}$ appliqué au premier comparateur 10. Les circuits précités étant bien connus de l'Homme de l'Art et ne faisant pas partie de l'invention, ils ne seront pas décrits ici.

Comme indiqué précédemment, lorsque la tension de l'arc électrique dans la torche croît dangereusement, il est nécessaire de modifier momentanément la position du point de fonctionnement de l'arc pour éviter le soufflage de ce dernier.

Dans ce but, le dispositif selon l'invention comprend tout d'abord un détecteur de seuil 15 à l'une des entrées duquel est appliqué un signal $E_c$ correspondant à la tension d'arc. Ce signal est, dans l'exemple représenté, prélevé à la sortie de l'amplificateur 11, puisque l'on connaît la tension d'arc limite admissible dès lors que l'on connaît la marge disponible sur la tension de commande du redresseur contrôlé. A l'autre entrée du détecteur de seuil 15, est appliquée une référence de tension $E_r$ correspondant au seuil, au-dessus duquel le dispositif d'anti-soufflage doit agir. Ce détecteur de seuil 15 délivre un signal dès lors que la tension $E_c$ est supérieure à la tension de référence $E_r$. Ce signal est appliqué à un amplificateur 16 dont le gain chute progressivement en fonction du temps écoulé à partir de l'émission de ce signal. Cet amplificateur 16 a un rôle essentiel : il permet de modifier immédiatement la référence de courant du circuit d'asservissement puisque le signal est appliqué au deuxième comparateur 12, puis de ramener progressivement cette référence de courant à sa valeur nominale $I_R$ en réduisant progressivement le signal de correction appliqué au comparateur 12.

Bien évidemment, le détecteur de seuil 15 et l'amplificateur 16 peuvent être réalisés de plusieurs façons différentes, l'important étant que le signal de correction ait une amplitude s'atténuant dans le temps. On peut donc envisager que le détecteur de seuil 15 émette une simple impulsion et que l'amplificateur 16 comporte un circuit d'entrée résistances condensateur unidirectionnel, dissymétrique dont le condensateur se charge rapidement sur une polarité par cette impulsion et se décharge plus lentement à la disparition de celle-ci. L'Homme de l'Art trouvera, sans sortir de l'invention, d'autres solutions techniques pour assurer l'atténuation du signal de correction appliqué au comparateur 12 pour modifier d'abord brusquement la valeur de référence de courant appliquée au circuit d'asservissement, puis ramener progressivement cette valeur à la valeur nominale.

Comme indiqué précédemment, on préfère en outre faire baisser la tension d'arc en réduisant le débit du gaz plasmagène injecté dans la torche 1 en manœuvrant la valve représentée schématiquement sous la référence 4. De la même manière que précédemment, cette réduction du débit doit être momentanée, mais suffisante, pour éviter le soufflage de l'arc, étant entendu que le point nominal de fonctionnement de l'arc doit ultérieurement être retrouvé.

Dans ce but, on utilise encore le signal de correction issu de l'amplificateur 16, et dont l'amplitude décroît en fonction du temps écoulé à partir de l'émission du signal émis par le détecteur de seuil 15. Ce signal de correction est appliqué à un intégrateur unidirectionnel 17 dont la borne de sortie commande la valve d'injection 4 du gaz plasmagène. Bien évidemment, on applique également à cet intégrateur 17 un signal de référence $V_R$ pour permettre au signal de sortie de l'intégrateur 17 de retrouver progressivement sa valeur nominale lorsque l'amplitude du signal de correction diminue, ce qui permet à la valve 4 de revenir progressivement à sa position d'origine. On constate donc que le dispositif d'anti-soufflage selon l'invention permet de modifier très rapidement la position du point de fonctionnement de l'arc électrique dans la torche dès lors que la tension d'arc monte à une valeur dangereuse proche de la tension limite d'alimentation et que l'arc va être soufflé, en augmentant immédiatement le courant d'arc, donc en diminuant la tension d'arc. Cette modification rapide, qui est en fait une correction, est ensuite progressivement annulée, de telle manière que le point de fonctionnement de l'arc revienne progressivement à sa position nominale déterminée pour optimiser le fonctionnement électrique de la torche. De plus, une réduction du débit de gaz plasmagène temporaire est mise en œuvre tant que subsistent des signaux de correction issus de l'amplificateur 16.

Bien que seul un mode de réalisation de l'invention ait été décrit, il est évident que toute modification apportée par l'Homme de l'Art dans le même esprit, ne sortirait pas du cadre de la présente invention. Il est notamment possible, comme on l'a vu précédemment, de réaliser les fonctions du détecteur de seuil 15 et de l'amplificateur 16 par d'autres moyens que ceux qui ont été décrits, l'importance résidant dans la décroissance du signal de correction émis, de manière à ce que le système revienne à son point de fonctionnement optimal.

## Revendications

1. Dispositif d'anti-soufflage de l'arc dans une torche à plasma (1) avec une caractéristique tension-courant négative, permettant de modifier momentanément la position du point de fonctionnement en courant et en tension dudit arc en agissant, en fonction de la tension de l'arc, sur la référence de courant appliquée à une boucle d'asservissement en courant dudit arc, caractérisé en ce qu'il comprend un détecteur de seuil (15) émettant un signal destiné à faire croître immédiatement l'intensité du courant de référence appliqué à ladite boucle, dès lors que ladite tension d'arc est supérieure à une valeur déterminée, et, en série avec ledit détecteur de seuil (15), un amplificateur (16) dont le gain chute progressivement en fonction du temps écoulé à partir de l'émission dudit signal, de manière à atténuer progressivement ce dernier et à ramener petit à petit l'intensité du courant de référence à sa valeur nominale.

2. Dispositif d'anti-soufflage selon la revendication 1, caractérisé en ce qu'il comprend en outre, un intégrateur unidirectionnel (17) dont une borne d'entrée est connectée à la sortie dudit amplificateur (16) et dont la borne de sortie commande la valve (4) d'injection du gaz plasmagène dans ladite torche (1), de telle manière qu'il résulte d'un signal issu dudit amplificateur (16) une réduction du débit dudit gaz dans ladite torche (1) proportionnelle à l'amplitude dudit signal.

## Claims

1. Anti-extinction device for the arc in a plasma torch (1) with a negative voltage/current characteristic, making it possible momentarily to modify the current and voltage operating point of the said arc by acting as a function of the arc voltage on the current reference applied to a loop for controlling the current of the said arc, characterized in that it comprises a threshold detector (15) emitting a signal intended to increase immediately the intensity of the reference current applied to the said loop from the moment when the said arc voltage is higher than a specific value and, in series with the said threshold detector (15), an amplifier (16), the gain of which falls progressively as a function of the time elapsed since the emission of the said signal, so as progressively to attenuate the latter and gradually return the intensity of the reference current to its nominal value.

2. Anti-extinction device according to Claim 1, characterized in that it also possesses a one-way integrator (17), an input terminal of which is connected to the output of the said amplifier (16) and the output terminal of which controls the valve (4) for injecting plasmagenic gas into the said torch (1), in such a way that the result of a signal obtained from the said amplifier (16) is a reduction of the flow of the said gas into the said torch (1), the said reduction being proportional to the amplitude of the said signal.

## Patentansprüche

1. Vorrichtung zur Vermeidung des Ausblasens des Lichtbogens in einem Plasmabrenner (1) mit einer negativen Strom-Spannungs-Charakteristik, die die augenblickliche Veränderung der Lage des Arbeitspunktes in Strom und Spannung des genannten Lichtbogens ermöglicht, indem sie in Abhängigkeit von der Spannung des Lichtbogens auf den Referenz-Strom wirkt, der in einer Regelschleife im Strom des genannten Lichtbogens fließt, dadurch gekennzeichnet, daß sie einen Schwellenwertdetektor (15) umfaßt, der ein Signal emittiert, das dazu bestimmt ist, unmittelbar die Intensität des in der Regelschleife fließenden Referenz-Stromes zu erhöhen, sobald die genannte Spannung des Lichtbogens höber als ein vorbestimmter Wert ist, und in Serie mit diesem Schwellenwertdetektor (15) einen Verstärker (16), dessen Ausgangsleistung progressiv in Abhängigkeit von der vergangenen Zeit, ausgehend von der Emission des genannten Signals, abnimmt, so daß dieses letztere nach und nach abgeschwächt wird und die Intensität des Referenz-Stromes allmählich auf ihren Nennwert zurückgeführt wird.

2. Vorrichtung nach Anspruch 1, dadurch gekennzeichnet, daß sie außerdem einen einseitig gerichteten Integrator (17) umfaßt, dessen eine Eingangsklemme mit dem Ausgang des genannten Verstärkers (16) verbunden ist und dessen Ausgangsklemme das Einspritzventil (4) von Plasmagas in den genannten Plasmabrenner (1) steuert, so daß sich aufgrund eines von dem genannten Verstärker (16) stammenden Signale eine Reduzierung des Durchsatzes an dem genannten Gas in dem genannten Brenner (1) proportional zur Amplitude des genannten Signals ergibt.